# EUROPÄISCHE PATENTSCHRIFT

(11) **EP 0 792 186 B1**
(45) Veröffentlichungstag und Bekanntmachung des Hinweises auf die Patenterteilung: **12.08.1998**
(21) Anmeldenummer: 95939262.2
(22) Anmeldetag: 13.11.1995
(51) Int. Cl.: B01D 53/50, B01D 53/64

(54) **VERFAHREN UND VORRICHTUNG ZUM REINIGEN VON VERBRENNUNGSABGASEN**
COMBUSTION EXHAUST GAS SCRUBBING PROCESS AND DEVICE
PROCEDE ET DISPOSITIF DE LAVAGE D'EFFLUENTS GAZEUX DE COMBUSTION

(30) Priorität: 18.11.1994 DE 4441090
(43) Veröffentlichungstag der Anmeldung: 03.09.1997
(73) Patentinhaber: STEAG Aktiengesellschaft, 45128 Essen (DE)
(72) Erfinder: WINKLER, Hermann, D-45665 Recklinghausen (DE); NEUMANN, Marion, D-44536 Lünen (DE)
(86) Internationale Anmeldenummer: EP9504440
(87) Internationale Veröffentlichungsnummer: WO9615845

(56) Entgegenhaltungen:
- EP-A- 0 405 290
- WO-A-93/08902
- DE-A- 4 123 258

## Beschreibung

Die Erfindung betrifft ein Verfahren und eine Vorrichtung zum Reinigen von Verbrennungsabgasen aus Feuerungsanlagen, wobei die Verbrennungsabgase unter Zugabe von Aktivkohlepartikeln einer Naßwäsche unterworfen werden.

Bei Müllverbrennungsanlagen ist es aus der Praxis bekannt, den Schwermetallgehalt der Verbrennungsabgase durch eine Abfolge von Naßwäschen weitestgehend zu reduzieren. Probleme kann Hg verursachen. Es bedarf daher eines entsprechenden Reinigungsschrittes, um den behördlichen Auflagen zu genügen. Diese schreiben derzeit vor, daß der Hg-Gehalt 50 µg/m³ nicht übersteigen darf. Zur Schwermetallreinigung ist dem Kamin ein Aktivkohlefilter vorgeschaltet, das als Festbett- oder Flugstromanlage arbeitet. Das erforderliche Volumen insbesondere einer Festbettanlage ist erheblich. Auch ergibt sich ein vergleichsweise hoher Druckverlust. Insgesamt resultiert ein erheblicher Investitions- und Betriebskostenaufwand. Schließlich besteht eine nicht zu vernachlässigende Brandgefahr. Im übrigen ist damit zu rechnen, daß in Zukunft der zulässige Maximalgehalt an Schwermetallen, insbesondere Quecksilber, abgesenkt wird.

Bei Kraftwerks-Feuerungsanlagen liegen die Verhältnisse etwas anders. Die hier erzeugten Verbrennungsabgase enthalten bei Einsatz deutscher Kohle Quecksilber in einer Menge von 10 bis 15 µg/m³. Zur Zeit gibt es noch keine behördlichen Auflagen. Es ist allerdings damit zu rechnen, daß in Zukunft die Anforderungen ansteigen.

Aktivkohlefilter können diesen Anforderungen nur unter Inkaufnahme der obigen Nachteile genügen, wobei zu berücksichtigen ist, daß bei Müllverbrennungsanlagen die erzeugte Menge der Verbrennungsabgase vergleichsweise gering ist. Noch viel ungünstiger liegen die Verhältnisse daher bei Kraftwerks-Feuerungsanlagen, die um ein vielfaches mehr an Verbrennungsabgasen erzeugen. Ein Filter würde hier Dimensionen annehmen, die in der Praxis nicht toleriert werden können, und zwar sowohl im Hinblick auf den Platzbedarf als auch im Hinblick auf die Höhe des Druckverlustes und die resultierenden Kosten.

Das bekannte Verfahren der eingangs genannten Art (DE 41 23 258) schafft hier Abhilfe, da die in die Naßwäsche eingebrachten Aktivkohlepartikel den Schwermetallgehalt so stark reduzieren, daß in den aus der Naßwäsche austretenden Verbrennungsabgasen Schwermetalle nicht mehr nachweisbar sind. Hierzu bedarf es keines zusätzlichen Verfahrenschrittes und nur eines verschwindend geringen anlagetechnischen Aufwands. Auch ergeben sich hinsichtlich des Druckverlustes keine merklichen Nachteile. Dabei wird als zusätzlicher Vorteil erzielt, daß die Aktivkohlepartikel unter den Bedingungen der Naßwäsche in der Lage sind, neben den Schwermetallen auch organische Bestandteile, wie etwa Dioxine und Furane zu binden.

Die erforderliche Menge an Aktivkohlepartikeln ist relativ gering. Allerdings wurde gefunden, daR es wünschenswert ist, den Bedarf an Adsorptionsmittel noch weiter zu senken, da Aktivkohle ein vergleichsweise teueres Material ist.

Der Erfindung liegt daher die Aufgabe zugrunde, bei der Reinigung der Verbrennungsabgase den Verbrauch an Aktivkohlepartikeln zu reduzieren.

Zur Lösung dieser Aufgabe ist das Verfahren nach der Erfindung dadurch gekennzeichnet, daß die Aktivkohlepartikel aus der bei der Naßwäsche entstehenden Suspension abgetrennt und in die Naßwäsche rezirkuliert werden, wobei ein Teil der Partikel abgezweigt und vor der Rezirkulation thermisch desorbiert wird.

Zwar ist aus der WO 93 08 902 eine Rezirkulation von Aktivkohlepartikeln bekannt, jedoch handelt es sich dort um ein Verfahren zur Trockenreinigung von Rauchgasen. Auch findet dort keine thermische Desorbtion der Aktivkohlepartikel statt.

Überraschenderweise hat es sich gezeigt, daß die ohnehin relativ geringe Menge an Aktivkohle, die für die Schwermetallentfernung benötigt wird, sich in der Naßwäsche erst nach mehreren Durchgängen erschöpft. Durch Abtrennen und Desorbieren eines Teils der Partikel kann unter entsprechender Reduzierung des Verbrauchs ein ständiger Kreislauf aufrechterhalten werden.

Ein besonders günstiger Verfahrensablauf ergibt sich dann, wenn die Naßwäsche unter Zugabe von Kalkmilch und/oder Kalkstein auf etwa pH6 eingestellt wird.

In wesentlicher Weiterbildung der Erfindung wird vorgeschlagen, daß die bei der Naßwäsche entstehende Suspension durch Flotation in Gips und schwermetallhaltige Partikel aufgetrennt wird, und zwar vorzugsweise nach einer vorgeschalteten Teilentwässerung. Der Gips kann dann anschließend einer geeigneten, kommerziellen Verwertung zugeführt werden.

Eine weitere beträchtliche Einsparung an Adsoprtionsmittel ergibt sich dadurch, daß die Aktivkohlepartikel mit Parktikeln aus gelöschtem Kalk und/oder aus Kalkstein gemischt werden und daß die Partikelmischung stromauf der Naßwäsche in die Verbrennungsabgase eingegeben wird.

Diesem Verfahrensschritt liegt die Erkenntnis zugrunde, daß normalerweise ein großer Teil der teuren Aktivkohle in der Naßwäsche von den sauren Bestandteilen der Verbrennungsabgase, wie SO₂, SO₃, HCl und HF verbraucht wird. Dies unterbinden die zusammen mit der Aktivkohle in den Rauchgasstrom eingebrachten Partikeln aus Ca(OH)₂ bzw. CaCO₃. Sie reagieren in der Gasphase mit den sauren Rauchgasbestandteilen und blockieren diese, so daß die Aktivkohlepartikel beim Eintritt in die Naßwäsche ihre Funktion, nämlich die Anbindung der Schwermetalle und der organischen Verunreinigungen, voll erfüllen können. Die zusätzliche Einsparung an Aktivkohle beträgt mindestens 25%.

Bei Verwendung eines der Naßwäsche vorgeschalteten Abgas-Wärmetauschers wird die Partikelmischung vorzugsweise stromauf des Abgas-Wärmetauschers in die Verbrennungsabgase eingegeben. Im Wärmetauscher wird der Taupunkt der Schwefelsäure unterschritten. H₂ SO₄ kondensiert und kann in dieser Form verstärkt von den Aktivkohlepartikeln adsorbiert werden. Handelt es sich um einen regenerativen Wärmetauscher, so wird ferner die Durchschleusung von Schadstoffen zur Reingasseite verhindert.

In wesentlicher Weiterbildung der Erfindung wird ferner vorgeschlagen, daß die desorbierten Aktivkohlepartikel zur Mischung mit den Partikeln aus gelöschtem Kalk und/oder aus Kalkstein rezirkuliert werden. Es ergeben sich also zwei Rezirkulationsströme, von denen der eine direkt in die Naßwäsche führt, während der andere, der die desorbierten Partikel enthält, zur Mischung mit den Partikeln aus gelöschtem Kalk bzw. aus Kalkstein geleitet wird. Der Adsorbtionsmittelkreislauf kann auf diese Weise sehr lange ohne wesentliche Zugabe an frischem Material aufrechterhalten werden.

Der Naßwäsche kann eine selektive katalytische Oxidation vorgeschaltet sein. Dabei wird das metallisch-dampfförmig aus der Feuerungsanlage kommende Hg⁰ zu Hg²⁺ oxidiert. Es gelangt in dieser Form in die Naßwäsche. Wird die selektive katalytische Oxidation im Anschluß an die Naßwäsche durchgeführt, was ebenfalls möglich ist, so gelangt Hg⁰ in vermehrter Form in die Naßwäsche. Im übrigen können die Verbrennungsabgase vor der Naßwäsche außerdem durch einen Luftvorwärmer und ein Elektrofilter geleitet werden.

Eine besonders vorteilhafte Ausführungsform einer Vorrichtung zum Durchführen des erfindungsgemäßen Reinigungsverfahrens ist mit einem REA-Wäscher versehen, der Gasein- und -auslaßleitungen sowie eine Adsorptionsmittelleitung aufweist und an den eine Einrichtung zum Nachbehandeln der bei der Naßwäsche entstehenden Suspension angeschlossen ist. Diese Vorrichtung ist dadurch gekennzeichnet, daß die Einrichtung zum Nachbehandeln der Suspension eine Einrichtung zum Abtrennen der Feststoffe aus der Suspension aufweist, an die eine Flotationseinrichtung mit einem Gipsauslaß und einem Auslaß für Aktivkohlepartikel angeschlossen ist, wobei der Auslaß für Aktivkohlepartikel an die Adsorptionsmittelleitung des REA-Wäschers sowie an eine thermische Desorptionseinrichtung angeschlossen ist.

In Weiterbildung dieser Vorrichtung ist eine Mischeinrichtung für Aktivkohlepartikel und Partikel aus gelöschtem Kalk und/oder aus Kalkstein vorgesehen, die mit der Gaseinlaßleitung des REA-Wäschers verbunden ist. Vorteilhafterweise ist an diese Mischeinrichtung der Auslaß der thermischen Desorptionseinrichtung angeschlossen.

Dabei kann es ferner vorteilhaft sein, die Mischeinrichtung stromauf eines dem REA-Wäscher vorgeschalteten Abgas-Wärmetauschers anzuordnen.

Die Erfindung wird im folgenden anhand bevorzugter Ausführungsbeispiele in Zusammenhang mit der beiliegenden Zeichnung näher erläutert. Die Zeichnung zeigt in:
- Fig. 1: ein Fließschema einer ersten erfindungsgemäßen Vorrichtung;
- Fig. 2: ein Fließschema einer zweiten erfindungsgemäßen Vorrichtung.

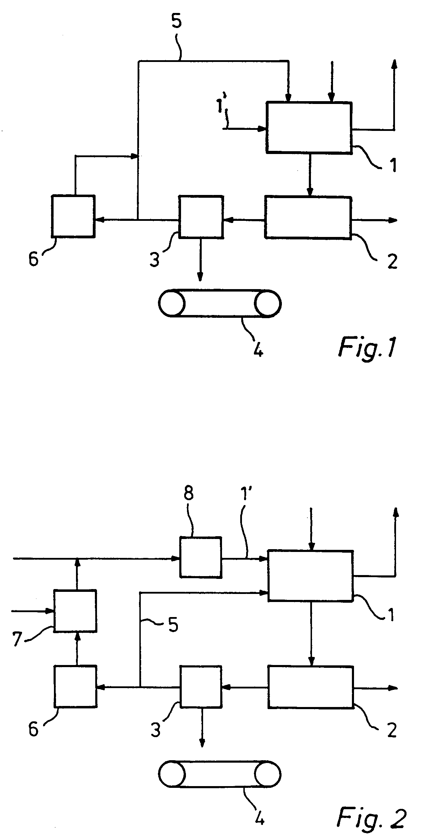

Die Vorrichtung nach Fig. 1 weist einen REA-Wäscher 1 auf, der über eine Gaseinlaßleitung 1' von links mit zu reinigenden Verbrennungsabgasen beschickt wird. Oben in den REA-Wäscher 1 wird Kalkmilch eingegeben. Außerdem wird der REA-Wäscher 1 mit Aktivkohlepartikeln versorgt, an denen sich die in den Verbrennungsabgasen enthaltenen Schwermetalle und organischen Verunreinigungen anlagern.

Die im REA-Wäscher 1 entstehende Suspension gelangt in eine Hydrozyklon 2, dessen Feststoffauslaß mit einer Flotationseinrichtung 3 verbunden ist. Hier werden die Aktivkohlepartikel vom Gips getrennt. Letzterer gelangt in konventioneller Weise auf ein Bandfilter 4 bzw. zu einer anderen geeigneten Entwässerungseinrichtung.

Der Auslaß für Aktivkohlepartikel der Flotationseinrichtung 3 ist über eine Leitung 5 mit dem REA-Wäscher 1 verbunden. Ein Teil der Aktivkohlepartikel gelangt in eine thermische Desorptionseinrichtung 6 und wird dort von den Schwermetallen befreit. Die desorbierten Aktivkohlepartikel werden ebenfalls in den REA-Wäscher 1 zurückgefördert, und zwar über die Leitung 5.

Die Vorrichtung nach Fig. 2 unterscheidet sich von der nach Fig. 1 vor allen Dingen dadurch, daß eine Mischeinrichtung 7 vorgesehen ist, die dazu dient, die aus der thermischen Desorbtionseinrichtung 6 kommenden Aktivkohlepartikel mit Parktikeln aus gelöschtem Kalk und/oder aus Kalkstein zu mischen. Diese Partikelmischung wird sodann in die Gaseinlaßleitung 1' des REA-Wäschers 1 eingegeben. Die Partikel aus gelöschtem Kalk bzw. aus Kalkstein reagieren mit den sauren Bestandteilen der Verbrennungsabgase und hindern diese somit an einer Reaktion mit den Aktivkohlepartikeln in der Naßwäsche. Die Aktivkohlepartikel stehen also in vollem Umfang für die Adsorption der Schwermetall, insbesondere des Quecksilbers, und der organischen Verunreinigungen in der Naßwäsche zur Verfügung.

Ferner zeigt Fig. 2 einen Abgas-Wärmetauscher 8, der zwischen der Mischeinrichtung 7 und dem REA-Wäscher 1 angeordnet ist. Im Wärmetauscher 8 kommt es zu einer Kondensation von Schwefelsäure und zu einer anschließenden Reaktion mit den Partikeln aus gelöschtem Kalk bzw. aus Kalkstein.

Im Rahmen der Erfindung sind durchaus Abwandlungsmöglichkeiten gegeben. So kann die Mischeinrichtung 7 auch von einer externen Quelle mit Aktivkohlepartikeln versorgt werden. Ferner kann bei der Anordnung nach Fig. 2 auf den Wärmetauscher 8 verzichtet werden.

## Patentansprüche

1. Verfahren zum Reinigen von Verbrennungsabgasen aus Feuerungsanlagen, bei dem die Verbrennungsabgase unter Zugabe von Aktivkohlepartikeln einer Naßwäsche unterworfen werden,
**dadurch gekennzeichnet,**
daß die Aktivkohlepartikel aus der bei der Naßwäsche entstehenden Suspension abgetrennt und in die Naßwäsche rezirkuliert werden, wobei ein Teil der Partikel abgezweigt und vor der Rezirkulation thermisch desorbiert wird.

2. Verfahren nach Anspruch 1, dadurch gekennzeichnet, daß die Naßwäsche unter Zugabe von Kalkmilch und/oder Kalkstein auf etwa pH6 eingestellt wird.

3. Verfahren nach Anspruch 1 oder 2, dadurch gekennzeichnet, daß die bei der Naßwäsche entstehende Suspension durch Flotation in Gips und schwermetallhaltige Partikel aufgetrennt wird, und zwar vorzugsweise nach einer vorgeschalteten Teilentwässerung.

4. Verfahren nach einem der Ansprüche 1 bis 3, dadurch gekennzeichnet, daß die Aktivkohlepartikel mit Partikeln aus gelöschtem Kalk und/oder aus Kalkstein gemischt werden und daß die Partikelmischung stromauf der Naßwäsche in die Verbrennungsabgase eingegeben wird.

5. Verfahren nach Anspruch 4, dadurch gekennzeichnet, daß bei Verwendung eines der Naßwäsche vorgeschalteten Abgas-Wärmetauschers die Partikelmischung stromauf des Abgas-Wärmetauschers in die Verbrennungsabgase eingegeben wird.

6. Verfahren nach Anspruch 4 oder 5, dadurch gekennzeichnet, daß die desorbierten Aktivkohlepartikel zur Mischung mit den Partikeln aus gelöschtem Kalk und/oder aus Kalkstein rezirkuliert werden.

7. Vorrichtung zum Reinigen von Verbrennungsabgasen aus Feuerungsanlagen mit einem REA-Wäscher (1), der Gasein- und -auslaßleitungen sowie eine Adsorptionsmittelleitung (5) aufweist und an den eine Einrichtung zum Nachbehandeln der bei der Naßwäsche entstehenden Suspension angeschlossen ist,
**dadurch gekennzeichnet,**
daß die Einrichtung zum Nachbehandeln der Suspension eine Einrichtung (2) zum Abtrennen der Feststoffe aus der Suspension aufweist, an die eine Flotationseinrichtung (3) mit einem Gipsauslaß und einem Auslaß für Aktivkohlepartikel angeschlossen ist, wobei der Auslaß für Aktivkohlepartikel an die Adsorptionsmittelleitung (5) des REA-Wäschers (1) sowie an eine thermische Desorptionseinrichtung (6) angeschlossen ist.

8. Vorrichtung nach Anspruch 7, dadurch gekennzeichnet, daß der Auslaß der thermischen Desorptionseinrichtung (6) an die Adsorptionsmittelleitung (5) des REA-Wäschers (1) angeschlossen ist.

9. Vorrichtung nach Anspruch 7, dadurch gekennzeichnet, daß sie eine Mischeinrichtung (7) für Aktivkohlepartikel und Partikel aus gelöschtem Kalk und/oder aus Kalkstein, die mit der Gaseinlaßleitung (1') des REA-Wäschers (1) verbunden ist, enthält.

10. Vorrichtung nach Anspruch 9, dadurch gekennzeichnet, daß die Mischeinrichtung (7) stromauf eines dem REA-Wäscher (1) vorgeschalteten Abgas-Wärmetauschers (8) angeordnet ist.

11. Vorrichtung nach Anspruch 9 oder 10, dadurch gekennzeichnet, daß der Auslaß der thermischen Desorbtionseinrichtung (6) an die Mischeinrichtung (7) angeschlossen ist.

## Claims

1. Method of cleaning combustion exhaust gases from furnaces, in which the combustion exhaust gases are subjected to a wet cleaning with addition of activated carbon particles, characterised in that the activated carbon particles are separated out of the suspension arising in the wet cleaning and are recirculated in the wet cleaning, wherein a part of the particles is branched off and thermally desorbed before the recirculation.

2. Method according to claim 1, characterised in that the wet cleaning is set to about pH6 with addition of lime solution and/or limestone.

3. Method according to claim 1 or 2, characterised in that the suspension arising in the wet cleaning is separated out by flotation in calcium sulfate and particles containing heavy metal, and in fact preferably after a prior partial drying.

4. Method according to one of claims 1 to 3, characterised in that the activated carbon particles are mixed with particles from dissolved lime and/or from limestone and that the particle mixture is added to the combustion exhaust gases upstream of the wet cleaning.

5. Method according to claim 4, characterised in that on use of an exhaust gas heat exchanger ahead of the wet cleaning the particle mixture is added to the combustion gases upstream of the exhaust gas heat exchanger.

6. Method according to claim 4 or 5, characterised in that the desorbed activated carbon particles are recirculated for mixing with the particles of dissolved lime and/or limestone.

7. Device for cleaning combustion exhaust gases from furnaces, with a REA washer (1), which has gas inlet and outlet lines as well as an adsorption means line (5) and to which equipment for after-treatment of the suspension arising during the wet cleaning is connected, characterised in that the equipment for the after-treatment of the suspension comprises equipment (2) for separating out solids from the suspension, to which flotation equipment (3) with a calcium sulfate outlet and an outlet for activated carbon particles is connected, wherein the outlet for activated carbon particles is connected to the adsorption means line (5) of the REA washer (1) as well as to thermal desorption equipment (6).

8. Device according to claim 7, characterised in that the outlet of the thermal desorption equipment (6) is connected to the desorption means line (5) of the REA washer (1).

9. Device according to claim 7, characterised in that it contains mixing equipment (7) for activated carbon particles and particles of dissolved lime and/or of limestone, which is connected with the gas inlet line (1') of the REA washer (1).

10. Device according to claim 9, characterised in that the mixing equipment (7) is arranged upstream of an exhaust gas heat exchanger (8) connected ahead of the REA washer (1).

11. Device according to claim 9 or 10, characterised in that the outlet of the thermal desorption equipment (6) is connected to the mixing equipment (7).

## Revendications

1. Procédé pour l'épuration de gaz d'échappement de combustion d'installations de chauffe, où les gaz d'échappement de combustion sont soumis, avec addition de particules de charbon actif, à un lavage humide,
caractérisé en ce que
les particules de charbon actif sont séparées de la suspension résultant du lavage humide et remises en circulation dans le lavage humide, une partie des particules étant dérivée et thermiquement désorbée avant la recirculation.

2. Procédé selon la revendication 1, caractérisé en ce que le lavage humide est ajusté à un pH d'environ 6 par addition de lait de chaux et/ou de calcaire.

3. Procédé selon la revendication 1 ou 2, caractérisé en ce que la suspension résultant du lavage humide est séparée par flottation en gypse et particules contenant des métaux lourds et cela avantageusement après une déshydratation partielle qui précède.

4. Procédé selon l'une des revendications 1 à 3, caractérisé en ce que les particules de charbon actif sont mélangées avec des particules provenant de chaux éteinte et/ou de calcaire et en ce que le mélange de particules est introduit en amont du lavage humide dans les gaz d'échappement de la combustion.

5. Procédé selon la revendication 4, caractérisé en ce que dans le cas de l'utilisation d'un échangeur de chaleur des gaz d'échappement précédant le lavage humide, le mélange des particules est introduit dans les gaz d'échappement de combustion en amont de l'échangeur de chaleur des gaz d'échappement.

6. Procédé selon la revendication 4 ou 5, caractérisé en ce que les particules de charbon actif désorbées sont remises en circulation pour un mélange avec les particules de chaux éteinte et/ou de calcaire.

7. Dispositif pour l'épuration des gaz d'échappement de combustion d'installations de chauffe avec un laveur REA (1), qui présente des conduites d'entrée et de sortie de gaz ainsi qu'une conduite de l'agent d'adsorption (5) et auquel est raccordé un système pour le post-traitement de la suspension résultant du lavage humide,
caractérise en ce que
le système pour le posttraitement de la suspension présente un dispositif (2) pour la séparation des matières solides de la suspension, auquel est raccordé un dispositif de flottation (3) avec une sortie du gypse et une sortie pour les particules de charbon actif, la sortie pour les particules de charbon actif étant raccordée à la conduite de l'agent d'adsorption (5) du laveur REA (1) ainsi qu'à un dispositif de désorption thermique (6).

8. Dispositif selon la revendication 7, caractérisé en ce que la sortie du système de désorption thermique (6) est raccordée à la conduite de l'agent d'adsorption (5) du laveur REA (1).

9. Dispositif selon la revendication 7, caractérisé en ce qu'il contient un système de mélange (7) pour les particules de charbon actif et les particules de chaux éteinte et/ou de calcaire qui est relié avec la conduite d'entrée de gaz (1') du laveur REA (1).

10. Dispositif selon la revendication 9, caractérisé en ce que le système de mélange (7) est agencé en amont d'un échangeur de chaleur (8) des gaz d'échappement précédant le laveur REA (1).

11. Dispositif selon la revendication 9 ou 10, caractérisé en ce que la sortie du système de désorption thermique (6) est raccordée au système de mélange (7).
